# FASCICULE DE BREVET EUROPEEN

(11) **EP 1 917 453 B1**
(45) Date de publication et mention de la délivrance du brevet: **12.10.2011**
(21) Numéro de dépôt: 06794510.5
(22) Date de dépôt: 31.07.2006
(51) Int. Cl.: C04B 41/50, C04B 41/52, C04B 41/89, C04B 35/632

(54) **PROTECTION ANTI-OXYDATION DE PIECES EN UN MATERIAU COMPOSITE CONTENANT DU CARBONE**
ANTIOXIDATIONSSCHUTZ VON GEGENSTÄNDEN AUS KOHLENSTOFFHALTIGEM VERBUNDWERKSTOFF
ANTI-OXIDATION PROTECTION OF PIECES MADE FROM A COMPOSITE MATERIAL CONTAINING CARBON

(30) Priorité: 01.08.2005 FR 0508196
(43) Date de publication de la demande: 07.05.2008
(73) Titulaire: MESSIER-BUGATTI, 78140 Vélizy Villacoublay (FR)
(72) Inventeur: NICOLAUS, Nathalie, F-69008 Lyon (FR); FONTARNOU, Véronique, F-69330 Meyzieu (FR); ROUSSARIE, Nadia, F-69960 Corbas (FR)
(74) Mandataire: Joly, Jean-Jacques
(86) Numéro de dépôt international: PCT/FR2006/050765
(87) Numéro de publication internationale: WO 2007/015026

(56) Documents cités:
- FR-A- 2 838 071
- US-B1- 6 455 107

## Description

L'invention concerne la protection contre l'oxydation de pièces en matériau composite contenant du carbone, c'est-à-dire en un matériau formé d'un renfort fibreux densifié par une matrice dans lequel du carbone est présent au moins dans le renfort fibreux, ou dans la matrice, ou encore dans une interphase entre fibres du renfort et matrice. Un domaine particulier d'application de l'invention est la protection contre l'oxydation de pièces en matériau composite carbone/carbone (C/C), en particulier de disques de freins d'avion, ou aéronautiques.

En milieu oxydant, la capacité de telles pièces à conserver de bonnes propriétés mécaniques à des températures élevées est conditionnée par la présence d'une protection efficace contre l'oxydation du carbone. En effet, le matériau composite présente inévitablement une porosité interne résiduelle, après son élaboration, porosité qui offre un accès au milieu ambiant jusqu'au coeur du matériau.

Un processus bien connu pour protéger des pièces en carbone contre l'oxydation consiste à former un revêtement externe en céramique, notamment en carbure de silicium SiC. Toutefois, de tels revêtements sont souvent fragiles et sujets à fissuration, et ne peuvent durablement assurer la fonction de barrière de protection vis-à-vis de l'oxygène du milieu ambiant.

Il a été proposé dans le document US 6 455 107 de former un revêtement externe à partir d'une composition contenant un dispersant tel que dé la silice colloïdale contenant des poudres réfractaires, principalement de la poudre de SiC, et d'autres poudres telles que du diborure de titane TiB₂, du nitrure de silicium Si₃N₄, du disiliciure de molybdène MoSi₂. Le but est de former un revêtement de protection ayant typiquement une épaisseur de 500 µm, et adhérant au carbone, notamment pour des éléments de cellules électrochimiques, des éléments favorisant la conduction électrique, notamment des particules métalliques, étant alors avantageusement ajoutés.

Il a été proposé dans le document US 4 931 413 de former un revêtement externe à partir d'une composition précurseur de céramique vitreuse capable de constituer un revêtement étanche. Cette composition est formée d'un mélange de poudre de diborure de titane TiB₂ et de silice colloïdale, éventuellement avec addition de poudre de SiC.

Dans certaines applications, la protection contre l'oxydation de pièces en matériau composite contenant du carbone doit en outre conserver son efficacité en présence de catalyseurs de l'oxydation du carbone et/ou d'humidité. Il en est ainsi en particulier pour les disques de freins d'avions qui peuvent être exposés à de l'humidité présente sur les pistes et être en contact avec des catalyseurs d'oxydation présents dans des produits déverglaçants utilisés pour les pistes d'aéroports.

Pour assurer une meilleure protection contre l'oxydation catalytique du carbone, il est connu d'utiliser des protections internes à base de phosphate(s) métallique(s) qui sont mises en place par imprégnation des pièces en matériau composite par une composition sous forme de solution aqueuse. L imprégnation en profondeur au sein de la porosité du matériau peut être facilitée par la présence d'un agent mouillant (ou surfactif) mélangé à la composition d'imprégnation ou appliqué préalablement. On pourra se référer en particulier au document US 5 853 821.

De telles protections internes sont efficaces jusqu'à un seuil de température à partir duquel la décomposition de leurs éléments actifs se produit. Afin d'étendre le domaine de protection vers des températures plus élevées, il a été proposé de former en outre un revêtement externe à la surface des pièces.

Le revêtement externe peut être sous forme d'une couche céramique, par exemple en SiC. Ainsi, le document WO 97/42135 décrit un procédé de protection anti-oxydation de pièces en matériau composite C/C selon lequel une protection interne contenant des phosphates d'aluminium et de zinc est complétée par un revêtement externe en SiC obtenu par application de silice colloïdale, séchage et traitement thermique à température élevée (1600°C à 1800°C) pour former du SiC par réaction chimique entre la silice et le carbone du matériau composite. Toutefois, comme indiqué plus haut, un revêtement SiC peut difficilement assurer une étanchéité durable vis-à-vis du milieu ambiant.

Le document US 6 740 408, propose de former un revêtement externe ayant des propriétés auto-cicatrisantes, c'est-à-dire ayant la capacité, par passage à l'état visqueux aux températures d'utilisation des pièces, de colmater d'éventuelles fissures pour former une barrière de diffusion efficace vis-à-vis de l'oxygène du milieu ambiant. Le revêtement est obtenu à partir d'une composition de revêtement comportant un mélange de poudre de composé vitreux de type borosilicate, de poudre de TiB₂ et d'un liant comprenant une résine précurseur de céramique en solution dans un solvant, typiquement une résine polycarbosilane (PCS) en solution dans du xylène. Après application de la composition de revêtement, des étapes de séchage (élimination du solvant) et de réticulation de la résine sont réalisées. La transformation en céramique du polymère obtenu par réticulation de la résine est effectuée par traitement thermique avant utilisation des pièces ou lors d'une première exposition des pièces à température élevée lors de leur utilisation.

Ce procédé permet une réelle amélioration de la protection anti-oxydation aux hautes températures par les propriétés auto-cicatrisantes du revêtement externe, grâce à la présence du composé vitreux de type borosilicate, c'est-à-dire comportant essentiellement des oxydes B₂O₃ et SiO₂. Le TiB₂ constitue un réservoir d'oxydes pour régénérer B₂O₃ qui a tendance à se volatiliser lorsque la température atteint 400°C à 500°C. De l'oxyde TiO₂ est aussi généré qui compense également la perte de B₂O₃ et accroît la viscosité du composé vitreux tout en préservant son pouvoir auto-cicatrisant.

Toutefois, l'utilisation d'une résine PCS en solution dans du xylène présente des inconvénients. Le xylène est inflammable et toxique et s'évapore très vite lors du séchage, ce qui pose des problèmes d'environnement et de sécurité. En outre, une étape contrôlée de réticulation du PCS est nécessaire, et est délicate car elle conditionne la qualité de la protection finale.

### OBJET ET RESUME DE L'INVENTION

L'invention a pour but de remédier aux inconvénients précités et propose à cet effet un procédé de protection anti-oxydation d'une pièce matériau composite contenant du carbone et présentant une porosité interne ouverte, notamment un disque de frein aéronautique en matériau composite C/C, procédé tel que défini par la revendication 1.

Le procédé selon l'invention présente plusieurs avantages significatifs.

Ainsi la mise en oeuvre du procédé ne nécessite ni solvant délicat à manipuler, ni réticulation d'une résine et est donc particulièrement aisée. En outre, comme cela sera montré plus loin, l'association du revêtement formé et de la protection interne confère au matériau composite une exceptionnelle résistance à l'oxydation.

La présence d'un composé vitreux aux propriétés auto-cicatrisantes dans le mélange de solution colloïdale d'oxyde réfractaire et de borure métallique conduit à la formation de verres mixtes au cours des cycles thermiques auxquels le matériau composite est exposé lors de son utilisation, ce qui confère au revêtement un rôle efficace de barrière de protection vis-à-vis de l'oxygène du milieu ambiant ainsi qu'une grande dureté contribuant à l'intégrité du revêtement.

Outre une fonction de dispersion des charges minérales qui lui sont ajoutées, la solution colloïdale contribue au colmatage de la porosité du matériau composite, par la présence de particules nanométriques d'oxyde réfractaire, et contribue à la formation de verres par la présence de cet oxyde réfractaire.

L'utilisation d'une solution colloïdale qui est basique, par exemple une solution colloïdale stabilisée par un composé basique ajouté, permet une liaison forte avec la protection interne à base phosphate ayant un caractère acide. Une bonne adhérence du revêtement de protection externe sur la pièce en matériau composite est ainsi assurée, ce qui est important pour une pièce soumise à des fortes sollicitations mécaniques comme c'est le cas d'un disque de frein aéronautique. Outre les fonctions mentionnées ci-avant, la solution colloïdale contribue ainsi à l'adhérence du revêtement de protection

La composition de revêtement comprend de préférence, en poids :
25 % à 50 % de solution colloïdale aqueuse d'oxyde réfractaire avec une concentration en oxyde réfractaire comprise de préférence entre 20% et 50%
5 % à 20 % de poudre de composé vitreux essentiellement de type borosilicate,
30 % à 60 % de poudre de borure métallique, et le complément éventuel étant de l'eau.

Avantageusement, on forme un revêtement qui, après traitement thermique, a une épaisseur relativement faible, de préférence comprise entre 50µm et 250µm, de préférence encore comprise entre 50µm et 100µm.

De préférence, un premier traitement thermique est effectué après imprégnation par la composition d'imprégnation et un deuxième traitement thermique est effectué après application de la composition de revêtement. Le deuxième traitement thermique est avantageusement effectué sous atmosphère oxydante à température élevée pendant une durée relativement brève.

Le ou chaque composé de type phosphate de la composition d'imprégnation peut être choisi notamment parmi les phosphates d'aluminium, zinc, manganèse, magnésium et calcium. On peut par exemple utiliser du métaphosphate d'aluminium.

La solution colloïdale peut comprendre au moins un oxyde choisi parmi les oxydes de silicium, de titane, de vanadium, d'yttrium, et de zirconium, en particulier de la silice SiO₂.

Un ou plusieurs borures métalliques en poudre parmi les borures de titane, de vanadium, de zirconium et d'hafnium peuvent être utilisés, en particulier TiB₂.

### BREVE DESCRIPTION DES DESSINS

D'autres particularités et avantages du procédé conforme à l'invention ressortiront à la lecture de la description faite ci-après, à titre indicatif mais non limitatif, en référence aux dessins annexés qui montrent :
- figure 1, des étapes successives d'un mode de mise en oeuvre d'un procédé selon l'invention ; et
- figure 2, une vue partielle de face d'un disque de frein en matériau composite C/C.

### DESCRIPTION DETAILLEE DE MODES DE REALISATION

Dans la description qui suit, on envisage la protection contre l'oxydation de pièces en matériau composite C/C, plus particulièrement de disques de frein aéronautiques.

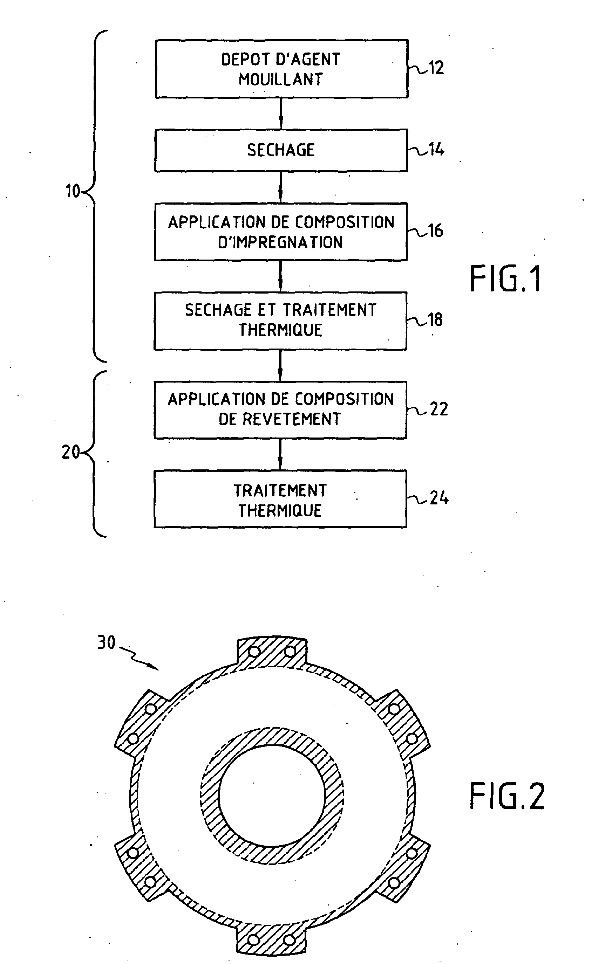

Selon le mode de mise en oeuvre du procédé illustré par la figure 1, une première étape 10 consiste à imprégner une pièce ou une partie d'une pièce en matériau composite C/C à protéger contre l'oxydation par une composition d'imprégnation apte à former une protection interne comprenant au moins un phosphate métallique, afin notamment d'apporter une protection contre l'oxydation catalytique du carbone.

On procède avantageusement comme décrit dans le brevet US 5 853 821. Une première phase 12 consiste à déposer un agent mouillant au sein de la porosité accessible du matériau composite. On utilise à cet effet une solution aqueuse d'un agent mouillant, tel que le produit commercialisé par la société allemande Hüls sous la dénomination « Marlophen NP9 ». Après imprégnation par la solution aqueuse d'agent mouillant et séchage (phase 14) , une composition d'imprégnation sous forme d'une solution aqueuse contenant au moins un phosphate métallique est appliquée à la surface extérieure de la pièce, ou de façon sélective dans des zones déterminées de cette surface par application au pinceau ou par projection (phase 16). On utilise par exemple une solution aqueuse de dihydrogénophosphate d'aluminium AI(H₂PO₃)₃. L'agent mouillant présent sur les surfaces des pores facilite la pénétration de la composition d'imprégnation. Un séchage, puis un traitement thermiques jusqu'à environ 700°C en atmosphère non oxydante sont ensuite réalisés (phase 18), résultant en un nappage des surfaces des pores accessibles du matériau composite C/C par une protection interne anti-oxydation.

Dans le cas d'un disque de frein 30 en matériau composite C/C tel que montré sur la figure 2, l'application de la composition d'imprégnation peut être limitée aux surfaces externes non frottantes (zones hachurées sur la figure), la surface frottante annulaire ou les deux surfaces frottantes annulaires opposées du disque n'étant pas imprégnées pour éviter une altération des propriétés tribologiques.

Une seconde étape 20 consiste à former un revêtement externe à propriétés auto-cicatrisantes.

On utilise à cet effet une composition de revêtement comportant au moins un oxyde réfractaire en solution colloïdale dans de l'eau, un composé vitreux de type borosilicate en poudre et au moins un borure métallique en poudre, les poudres de composé vitreux et de borure métallique étant dispersées dans la solution colloïdale.

La solution aqueuse colloïdale peut comporter au moins un oxyde réfractaire choisi parmi des oxydes de silicium, de titane, de vanadium, d'yttrium et de zirconium par exemple une solution colloïdale de silice.

Les tailles de particules d'oxyde réfractaire de la solution colloïdale sont pour l'essentiel inférieures à 200 nm, de préférence comprises entre 5 et 100 nm, de préférence encore comprises entre 5 et 40 nm. De telles particules nanométriques peuvent colmater la porosité du matériau composite au moins au voisinage de la surface sur laquelle la composition de revêtement est appliquée.

De préférence, on utilise une solution colloïdale basique. Le caractère basique peut être conféré par un additif, avantageusement un stabilisant de la solution colloïdale tel que de l'ammoniac NH₃ ou du sodium oxyde Na₂O. On assure ainsi une bonne adhérence avec la protection interne phosphate qui a un caractère acide, donc un ancrage du revêtement dans la porosité superficielle du matériau composite.

Le composé vitreux de type borosilicate comporte les oxydes B₂O₃ et SiO₂. D'autres oxydes pourront être présents pour ajuster la température à laquelle le composé passe à l'état visqueux permettant l'auto-cicatrisation. On utilise par exemple une poudre de verre « Pyrex^{®} », de la société des Etats-Unis d'Amérique Corning ou fournie par la société britannique Barloword Scientific (anciennement Bibby Sterilin) lequel verre a sensiblement la composition suivante (en pourcentages massiques) :

| | | |
|---|---|---|
| SiO₂ | : | 80,60% |
| B₂O₃ | : | 12,60% |
| Na₂O₃ | : | 4,2% |
| Al₂O₃ | : | 2,25% |
| Cl | : | 0,1% |
| CaO | : | 0,1% |
| MgO | : | 0,05% |
| Fe₂O₃ | : | 0,05% |

D'autres verres pourront être utilisés tels que des verres borosilicatés de référence 823-01 à -05 de la société des Etats-Unis d'Amérique Ferro, ou les verres commercialisés par la société allemande Schott AG sous la dénomination "Duran" (de préférence sous la référence "8330"), "Suprax" ou "Borofloat 40".

On notera que l'oxyde réfractaire de la solution colloïdale peut aussi contribuer à la formation de verres.

Le borure métallique en poudre est l'un au moins choisi parmi les borures de titane, de vanadium, de zirconium et d'hafnium. On utilise de préférence TiB₂.

Typiquement, la composition de revêtement comprend, en masse :
25 % à 50 % et, de préférence, 30 % à 40 % de solution colloïdale d'oxyde réfractaire avec une concentration en oxyde réfractaire comprise entre 20% et 50%,
5 % à 20 % et; de préférence, 10 % à 15 % de composé vitreux essentiellement de type borosilicate,
30 % à 60 % et, de préférence, 35 % à 50 % de borure métallique, le complément éventuel étant de l'eau.

Le borure métallique est présent de façon substantielle pour constituer, par oxydation, un réservoir d'oxyde B₂O₃ formateur de verre, celui-ci ayant tendance à se volatiliser lorsque la température atteint 400°C à 500°C.

La composition de revêtement est appliquée (phase 22) sur la surface externe de la pièce en matériau composite, là où la composition d'imprégnation ayant formé la protection interne a été appliquée. L'application peut être réalisée par projection de la composition ou au pinceau. La quantité de composition de revêtement appliquée est d'environ 10 à 30 mg/cm² avant séchage, de préférence 12 à 22 mg/cm².

Après application de la composition de revêtement, un traitement thermique est réalisé (phase 24). Différents traitements thermiques peuvent être réalisés:
(1) un simple séchage à une température de 80°C à 100°C, pendant 1 à plusieurs heures, ou en élevant progressivement la température jusqu'à 200°C à 250°C.
(2) un traitement thermique relativement bref dans un four sous atmosphère oxydante (air par exemple) à une température d'environ 800°C à 850°C et pendant une durée de quelques minutes à quelques dizaines de minutes, de préférence après séchage comme en (1) ci-avant ;
(3) un traitement thermique dans un four sous atmosphère non oxydante (azote par exemple) à environ 700°C, comme pour la protection interne.

Le traitement (2) est préféré car il permet d'emblée d'avoir une couche de protection externe ayant une adhérence et une dureté améliorées et de former une barrière de protection efficace vis-à-vis de l'oxygène du milieu ambiant.

Dans le cas d'un simple séchage, (traitement (1)) l'exposition ultérieure de la pièce en service à des températures élevées procure un effet équivalent (mais retardé) à celui d'un traitement thermique initial à haute température.

La quantité de composition de revêtement appliquée est choisie pour avoir, après l'étape de traitement thermique, une épaisseur de revêtement comprise de préférence entre 50 µm et 250 µm, de préférence entre 50 µm et 100 µm.

La pièce en matériau composite ainsi munie d'une protection interne et d'une protection externe contre l'oxydation peut être utilisée. Au cours de l'utilisation à température élevée en atmosphère oxydante, une perte éventuelle de B₂O₃ par volatilisation est compensée par l'apport de B₂O₃ par oxydation du borure métallique, ce qui permet de conserver des propriétés auto-cicatrisantes.

On notera, en variante, qu'un seul traitement thermique peut être effectué, la composition de revêtement étant appliquée après la composition d'imprégnation, sans séchage ou traitement thermique de celle-ci.

### Exemple

On a réalisé des échantillons en matériau composite C/C de la façon suivante :
formation de strates fibreuses par superposition de 3 nappes unidirectionnelles de fibres de carbone faisant entre elles des angles de ± 60° et liaison entre elles des nappes par aiguilletage léger,
superposition de strates fibreuses ainsi obtenues, avec liaison des strates entre elles par aiguilletage au fur et à mesure de leur superposition, jusqu'à obtenir une épaisseur de plusieurs cm,
découpe de préformes circulaires dans la plaque fibreuse ainsi obtenue, et
densification des préformes par une matrice de carbone pyrolytique formée par infiltration chimique en phase gazeuse jusqu'à obtenir une densité égale à environ 1,73.

Les échantillons obtenus ont été imprégnés par une solution aqueuse à 0,5 % en poids d'agent mouillant (surfactif) commercialisé par la société allemande Hüls sous la dénomination « Marlophen 89 ». A cet effet, les échantillons ont été immergés dans un bain de cette solution contenu dans un réservoir associé à une générateur d'ultrasons permettant de favoriser la pénétration de la solution au coeur de la porosité accessible du matériau composite. Les échantillons ont ensuite été séchés à environ 100°C pendant 5 h, laissant un film d'agent mouillant sur les parois des pores du matériau.

Une imprégnation par une composition d'imprégnation formée d'une solution aqueuse à 50 % en poids de di-hydrogénophosphate d'aluminium Al(H₂PO₄)₃ a ensuite été réalisée par application de la solution sur les surfaces externes des échantillons dans une quantité correspondant à 20 mg/cm².

Après traitement thermique sous air pendant plusieurs heures par élévation progressive de la température jusqu'à environ 350°C, un traitement thermique sous azote a été effectué par élévation de la température jusqu'à environ 700°C et maintien à cette température pendant environ 1 h, de manière à obtenir des échantillons munis d'une protection interne anti-oxydation à base phosphate ancrée dans la porosité accessible interne du matériau composite.

Des échantillons obtenus munis d'une telle protection interne ont été répartis en trois groupes :
(a) un premier groupe d'échantillons A laissés en l'état,
(b) un deuxième groupe d'échantillons B formé d'échantillons A munis en outre d'un revêtement de protection externe formé selon un processus conforme à celui décrit dans le document US 6 740 408 et comprenant :
   - l'application sur les surfaces externes des échantillons d'une composition de revêtement comportant environ, en poids : 19 % de résine silicone (commercialisée par la société allemande Wacker-Chemie GmbH sous la référence « Wacker H62C »), 19 % de xylène (solvant de la résine), 13 % en poids de poudre de verre «Pyrex®» et 49 % de poudre de TiB₂ commercialisée par la société des Etats-Unis d'Amérique Alfa Aesar, la quantité de composition de revêtement appliquée étant d'environ 17 mg/cm²,
   - un traitement thermique à environ 220°C pendant 2 h environ après élévation lente de la température (environ 1,5°C/h) pour réticulation de la résine silicone.
(c) un troisième groupe d'échantillons C formés d'échantillons A munis en outre d'un revêtement de protection externe selon un processus conforme à la présente invention et comprenant :
   - l'application sur les surfaces externes des échantillons C d'une composition aqueuse de revêtement comportant environ, en poids : 38,2 parts en poids d'une solution à 30 % de silice colloïdale dans de l'eau (solution colloïdale commercialisée par la société allemande Chemische Fabrik Budenheim sous la dénomination « FFB33K »), 12,8 parts en poids de poudre de verre «Pyrex®», finement divisée (granulométrie essentiellement inférieure à 50 µ) et 48,9 parts en poids de poudre de TiB₂ commercialisée par la société Alfa Aesar, la quantité de composition de revêtement appliquée étant de 17 mg/cm², et - un traitement thermique à environ 90°C pendant 2 h environ.

Des échantillons A, B et C ont été exposés à différentes conditions d'oxydation suivant les protocoles de test définis dans le tableau I qui suit.

Dans ce tableau sont indiquées les pertes de masse relatives mesurées (en % par rapport à la masse de l'échantillon au début du test). Certains tests sont réalisés avec "pollution" des échantillons par de l'acétate de potassium (AcK) en solution aqueuse à 50 g/l, AcK étant un catalyseur d'oxydation du carbone et étant utilisé couramment pour des produits déverglaçants sur des pistes d'aéroport.

**Tableau I**

| Conditions d'oxydation | Référence conditions d'oxydation | Présence AcK | A | B | C |
|---|---|---|---|---|---|
| | | | 20⁽¹⁾ mg/cm² | 20⁽¹⁾ mg/cm² | 20⁽¹⁾ mg/cm² |
| | | | | 17⁽²⁾ mg/cm² | 17⁽²⁾ mg/cm² |
| 5 cycles de 5 h à 650°C | p-650 | Non | 4,6 | 1,4 | -0,054 |
| 5 cycles de 30 min à 850°C | p-850 | Non | 3,4 | -0,2 | -0,154 |
| 5 h à 650°C + 15 min à 1200°C + 2 cycles de 5 h à 650°C | p-1200 | Non | 5,6 | 0,19 | 0,12 |
| 5 h à 650°C + 10 min à 1400°C + 2 cycles de 5 h à 650°C | p-1400 | Non | 10,4 | 3,7 | 3,1 |
| 5 h à 650°C + pollution par AcK + 2 cycles de 5 h à 650°C | p-650AcK | Oui | 6,6 | 2,7 | 2,05 |
| 5 h à 650°C + 15 min à 1200°C + pollution par AcK + 2 cycles de 5 h à 650°C | p-1200AcK | Oui | 55,9 | 30,6 | 36,17 |

| | | | | | |
|---|---|---|---|---|---|
| ⁽¹⁾ : quantité de composition à base de phosphate d'aluminium appliquée avant traitement thermique ⁽²⁾ : quantité de composition de revêtement à base de verre appliquée avant traitement thermique | | | | | |

Les valeurs négatives (c'est-à-dire, en fait, des gains de masse) proviennent de l'oxydation partielle de TiB₂ donnant les espèces TiO₂ et B₂O₃, et ne masquent aucune perte de masse.

On constate que les résultats obtenus avec les échantillons C sont notablement supérieurs à ceux obtenus avec les échantillons A et, dans la plupart des cas, meilleurs que ceux obtenus avec les échantillons B, sans présenter les inconvénients de la mise en oeuvre de la protection externe sur ces derniers.

On a soumis deux échantillons A et C à un processus comprenant :
(a) un vieillissement à 650°C sous air pendant 30h
   Au cours de 5 dernières heures de ce vieillissement, les pertes de masse relatives respective mesurées sont de 1,3% et 0% pour les échantillons A et C.
   L'échantillon C est soumis ensuite aux étapes (b) et (c) suivantes :
(b) un processus d'endommagement par immersion dans de l'eau dans un bac à ultrasons pendant environ 15 minutes suivie d'un décapage par brossage par brosse métallique, et
(c) une exposition à 650°C sous air pendant 5h.
   Une perte de masse relative de 0,43% a été mesurée après l'étape (c) , montrant encore un gain par comparaison avec une perte de masse relative de 1,3% mesurée sur l'échantillon A après l'étape (a).

On a soumis deux échantillons A et C à un processus comprenant:
(a') le protocole d'oxydation p-1400
   Au cours des 5 dernières heures de ce protocole, les pertes de masse respectives mesurées ont été de 5,2% et de 1,6% pour les échantillons A et C.
   L'échantillon C a été soumis ensuite aux étapes (b) et (c) suivantes :
(b) un processus d'endommagement par immersion dans de l'eau dans un bac à ultrasons pendant environ 15 minutes suivie d'un décapage par brossage par brosse métallique, et
(c) une exposition à 650°C sous air pendant 5h.
   Une perte de masse relative de 2,4% est mesurée après l'étape (c), montrant encore un gain par comparaison avec une perte de masse relative de 5,2% mesurée sur un échantillon A seulement après l'étape (a').
   En dépit de sa sévérité, l'endommagement appliqué aux échantillons C (étape (b)) n'a entraîné que peu de perte d'efficacité de la protection.

Ces tests, simulant un vieillissement sévère en environnement humide montrent aussi la très bonne tenue des échantillons C en comparaison avec les échantillons A alors que l'oxydation de TiB₂ donne B₂O₃ qui est connu pour être soluble dans l'eau.

### Exemple 2

Un échantillon D en matériau composite C/C a été muni d'une couche de protection externe comme l'échantillon C de l'exemple 1, mais en omettant la protection interne à base phosphate. Le tableau II ci-après montre les résultats obtenus (pertes de masse relatives) avec les échantillons C et D dans deux conditions d'oxydation.

**Tableau II**

| Conditions d'oxydation | C | D |
|---|---|---|
| | 20⁽¹⁾ mg/cm² | |
| | 17⁽²⁾ mg/cm² | 17⁽²⁾ mg/cm² |
| p-650 | -0,054 | 0,731 |
| p-650 AcK | 2,05 | 6,95 |

Les résultats obtenus montrent l'amélioration très importante de la protection par association protection interne et protection externe en comparaison avec une protection externe seule:

### Exemples 3, 4 et 5'

Un échantillon E a été obtenu en munissant un échantillon A de l'exemple 1 d'une protection externe obtenue par :
- application d'une composition aqueuse comprenant 36,4 parts en poids de silice colloïdale concentrée à 30 % "FFB33K", 4,8 parts d'eau, 12,2 parts de poudre de verre "Pyrex" et 46,6 parts de TiB₂ de la société Alfa Aesar, la quantité appliquée étant d'environ 17 mg/cm².
- traitement thermique à 90°C sous air pendant 2 heures.

Un échantillon F a été obtenu comme l'échantillon E à la différence du traitement thermique qui a été réalisé sous azote à 700°C pendant 1 heure.

Un échantillon G a été obtenu comme l'échantillon E à la différence du traitement thermique qui a été réalisé sous air à 800°C pendant 15 minutes.

Le tableau III ci-après montre les résultats obtenus (pertes de masse relatives) après un test d'oxydation effectué sur les échantillons E, F et G.

**Tableau III**

| Conditions d'oxydation | E | F | G |
|---|---|---|---|
| p-650 | 0,264 | 1,4 | 0,256 |

Le traitement thermique bref à 800°C sous air est préféré industriellement.

### Exemple 6

Un échantillon H a été préparé comme un échantillon A de l'exemple 1, mais en utilisant une solution aqueuse de phosphate d'aluminium concentrée à 48 % fournie par la société allemande Chemische Fabrik Budenheim et sans procéder à un traitement thermique après imprégnation par cette solution. Une composition aqueuse a ensuite été appliquée comprenant 38 parts en poids de silice colloïdale concentrée à 30 % "FFB33K", 12,9 parts en poids de poudre de verre "Pyrex", et 49,1 parts en poids de TiB₂ de la société Alfa Aesar.

Un traitement thermique a ensuite été effectué à environ 700°C sous azote pendant environ 1 heure.

Après oxydation sous air à 650°C pendant 30 heures, une perte de masse relative de 2,5 % a été mesurée sur l'échantillon.

Cet exemple montre que la réalisation d'un seul traitement thermique pour la protection interne et la protection externe est possible, mais avec des performances de tenue à l'oxydation sensiblement dégradées.

### Exemples 7, 8, 9, 10 et 11

Un échantillon 1 a été obtenu en munissant un échantillon A de l'exemple 1 d'une protection externe obtenue par :
- application d'une composition aqueuse comprenant 38,2 parts en poids de silice colloïdale "FFB38K" concentrée à 30 % environ et stabilisée au sodium par présence de 0,4 et 0,5 % en masse de Na₂O, 12,8 parts de poudre de verre "Pyrex" et 48,9 parts de TiB₂ de la société Alfa Aesar,
- traitement thermique à 90°C sous air pendant 2 h.

Un échantillon J a été préparé comme l'échantillon I, mais en utilisant une silice colloïdale "FFB30K" de Chemische Fabrik Budenheim stabilisée par présence d'environ 0,3 % en masse de Na₂O.

Un échantillon K a été préparé comme l'échantillon I, mais en utilisant une silice colloïdale "FFB34K" de Chemische Fabrik Budenheim stabilisée par présence d'environ 0,17 % en masse de Na₂O.

Un échantillon L a été préparé comme l'échantillon I, mais en utilisant une composition aqueuse comportant 38,2 parts en poids de silice colloïdale concentrée à 40 % environ fournie sous la référence "Ludox AS 40" par la société des Etats-Unis d'Amérique Grace Davison et stabilisée à l'ammoniac, 12,8 parts de poudre de verre "Pyrex" et 48,9 parts de TiB₂ de la société Alfa Aesar.

Un échantillon M a été préparé comme l'échantillon L mais en utilisant une composition aqueuse comportant 30,8 parts en poids de silice colloïdale, 14,4 parts de poudre de verre "Pyrex" et 54,8 parts de TiB₂.

Le tableau IV montre les résultats obtenus (pertes de masse relatives) sous différentes conditions d'oxydation des échantillons C et 1 à M.

**Tableau IV**

| Conditions d'oxydation | C | I | J | K | L | M |
|---|---|---|---|---|---|---|
| p-650 | -0,054 | -0,067 | -0,111 | 0,059 | -0,033 | -0,024 |
| p-850 | -0,154 | -0,214 | | | -0,17 | |
| p-1200 | 0,12 | -0,11 | | | 0,46 | |
| p-1400 | 3,1 | 3,52 | | | 3,50 | |
| p-650AcK | 2,05 | 1,34 | | | 1,75 | |
| p-1200AcK | 36,17 | 35,02 | 6,1:1 | 29,93 | 37,7 | 25,5 |

Toutes les silices colloïdales testées ont donné des résultats similaires.

### Exemple 12

Des échantillons N ont été obtenus comme l'échantillon F de l'exemple 4, la solution colloïdale utilisée étant basique (stabilisation par NH₃), le revêtement formé ayant une épaisseur d'environ 90µm,

Des essais d'adhérence et de dureté du revêtement ont été effectués respectivement à l'état initial d'un échantillon N après le traitement thermique sous azote à 700°C pendant une heure, puis sur des échantillons N après exposition subséquente à l'air à 650°C pendant 5 h et à 850°C pendant 30 h.

L'essai d'adhérence est un essai de quadrillage conforme à la norme ISO/DIS 2409 permettant d'évaluer la résistance d'une peinture à la séparation du substrat après réalisation d'incisions.

L'essai de dureté est un essai de rayure conforme à la norme ISO 1518 avec mesure de la charge minimale à appliquer pour faire pénétrer une aiguille dans le revêtement.

Le Tableau V ci-dessous résume les résultats obtenus.

| | Etat initial échantillon | Après 5 h à 650°C | Après 30 h à 850°C |
|---|---|---|---|
| Adhérence | Classe 3 | Classe 1 | Classe 2 |
| Dureté (N) | 3N | 12N | 12N |

On peut noter les bonnes performances en adhérence et en dureté après traitement thermique sous air conduisant à la formation de verres, lesquels traitements reflètent les conditions auxquelles des disques de freins aéronautiques en composite C/C sont exposés au cours de leur utilisation.

### Exemple 13

Des échantillons A' et C' ont été réalisés comme les échantillons A et C mais en appliquant la protection antioxydation seulement sur l'une des faces principales circulaires et le pourtour périphérique, l'autre face principale restant libre de protection.

Des tests de friction ont été effectués sur les échantillons A' et C' pour mesurer d'une part le coefficient de friction et, d'autre part, l'efficacité dans des conditions de freinage simulant un atterrissage d'urgence. Aucune différence significative n'a été constatée entre les résultats obtenus avec un échantillon A' et ceux obtenus avec un échantillon C'.

En outre, des échantillons C' ont été exposés à 30°C sous humidité relative de 95 % pendant des durées de 1 à 10 jours puis la face libre a été examinée par microscopie électronique à balayage muni d'une sonde EDX. Aucune espèce chimique provenant de la protection anti-oxydation n'a été observée permettant de conclure à l'absence totale de migration d'une telle espèce sur une surface frottante d'un disque de frein protégé contre l'oxydation conformément à l'invention par application d'une protection interne et d'une protection externe sur les surfaces non frottantes.

## Revendications

1. Procédé de protection anti-oxydation d'une pièce en matériau composite contenant du carbone et présentant une porosité interne ouverte, le procédé comportant les étapes de :
- imprégnation de la pièce par une composition d'imprégnation liquide contenant au moins un composé de type phosphate, au niveau d'au moins une partie de la surface extérieure de la pièce,
- application, sur ladite partie de la surface extérieure de la pièce, d'une composition de revêtement comprenant au moins un composé essentiellement de type borosilicate sous forme de poudres ayant des propriétés cicatrisantes et au moins un borure métallique sous forme de poudre, et
- traitement thermique après application de la composition de revêtement,
**caractérisé en ce que** l'on applique une composition de revêtement comprenant une solution colloïdale basique d'au moins un oxyde réfractaire dans de l'eau, ledit au moins un composé essentiellement de type borosilicate et ledit au moins un borure métallique.

2. Procédé selon la revendication 1, dans lequel on utilise une solution colloïdale stabilisée par un composé basique.

3. Procédé selon l'une quelconque des revendications 1 et 2, dans lequel la composition de revêtement comprend :
25 % à 50 % de solution colloïdale aqueuse d'oxyde réfractaire avec une concentration en oxyde réfractaire comprise entre 20% et 50% ;
5 % à 20 % de poudre de composé vitreux essentiellement de type borosilicate ;
30 % à 60 % de poudre de borure métallique ; et
le complément éventuel étant de l'eau.

4. Procédé selon l'une quelconque des revendications 1 à 3, dans lequel la quantité de composition de revêtement appliquée est choisie pour former un revêtement qui, après traitement thermique, a une épaisseur comprise entre 50µm et 250µm.

5. Procédé selon la revendication 4, dans lequel la quantité de composition de revêtement appliquée est choisie pour former un revêtement d'épaisseur comprise entre 50µm et 100µm.

6. Procédé selon l'une quelconque des revendications 1 à 5, dans lequel un premier traitement thermique est effectué après imprégnation par la composition d'imprégnation et un deuxième traitement thermique est effectué après application de la composition de revêtement.

7. Procédé selon la revendication 6, dans lequel le deuxième traitement thermique est effectué sous atmosphère oxydante à température d'environ 800°C à 850°C pendant une durée relativement brève de quelques minutes à quelques dizaines de minutes.

8. Procédé selon l'une quelconque des revendications 1 à 7, dans lequel la solution colloïdale comprend au moins un oxyde choisi parmi les oxydes de silicium, de titane, de vanadium, de zirconium et d'yttrium.

9. Procédé selon la revendication 8, dans lequel la solution colloïdale est une solution aqueuse de silice colloïdale

10. Procédé selon l'une quelconque des revendications 1 à 9, dans lequel la poudre d'au moins un borure métallique comprend une poudre d'au moins un borure choisi parmi les borures de titane, de vanadium, de zirconium et d'hafnium.

11. Procédé selon la revendication 10, dans lequel la poudre d'au moins un borure métallique est une poudre de diborure de titane TiB₂.

## Claims

1. A method of providing protection against oxidation for a part made of composite material containing carbon and presenting open internal pores, the method including the steps of:
- impregnating the part with a liquid impregnation composition containing at least a phosphate type compound, at least via a fraction of the outside surface of the part;
- applying a coating composition on said fraction of the outside surface of the part, the coating composition comprising at least one compound essentially of the borosilicate type in powder form and having healing properties and at least one metallic boride in powder form; and
- applying heat treatment after applying the coating composition,
**characterized in that** a coating composition is applied, the coating composition a basic colloidal solution of at least one refractory oxide in water, said at least one compound essentially of the borosilicate type, and said at least one metallic boride.

2. A method according to claim 1 wherein a colloidal solution is used which is stabilized by a basic compound.

3. A method according to claim 1 or claim 2, wherein the coating composition comprises:
25% to 50% of aqueous colloidal solution of refractory oxide with a concentration in refractory oxide lying in the range 25% to 50%;
5% to 20% of a powder of a vitreous compound essentially of the borosilicate type;
30% to 60% of a metallic boride powder, and
the possible remainder being water.

4. A method according to anyone of claims 1 to 3, wherein the amount of coating composition applied is chosen to form a coating which, after heat treatment has a thickness lying in the range 50µm to 250µm.

5. A method according to claim 4, wherein the amount of coating composition applied is chosen to form a coating having a thickness lying in the range 50µm to 100µm.

6. A method according to anyone of claims 1 to 5, wherein a first heat treatment is performed after impregnation with the impregnation composition, and a second heat treatment is performed after application of the coating composition.

7. A method according to claim 6, wherein the second heat treatment is performed under an oxidizing atmosphere at a temperature of about 800°C to 850°C for a relatively short duration of a few minutes to a few dozen minutes.

8. A method according to anyone of claims 1 to 7, wherein the colloidal solution comprises at least one oxide selected from the oxides of silicon, titanium, vanadium, zirconium, and yttrium.

9. A method according to claim 8, wherein the colloidal solution is an aqueous solution of colloidal silica.

10. A method according to anyone of claims 1 to 9, wherein the powder of at least one metallic boride comprises a powder of at least one boride selected from the borides of titanium, vanadium, zirconium, and hafnium.

11. A method according to claim 10, wherein the powder of at least one metallic boride is a powder of titanium diboride (TiB₂) .

## Patentansprüche

1. Verfahren zum Schutz eines Werkstücks aus einem kohlenstoffhaltigen und eine offene innere Porosität aufweisenden Verbundwerkstoff vor einer Oxidation, wobei das Verfahren die Schritte umfaßt:
- Imprägnieren des Werkstücks mit einer flüssigen Imprägnierungszusammensetzung, die wenigstens eine Verbindung vom Typ Phosphat enthält, im Bereich wenigstens eines Teils der Außenseite des Werkstücks,
- Auftragen - auf den Teil der Außenseite des Werkstücks - einer Beschichtungszusammensetzung, die wenigstens eine Verbindung im wesentlichen vom Typ Borosilikat in Form von Pulvern mit heilungsfördernden Eigenschaften sowie wenigstens ein pulverförmiges Metallborid umfaßt, und
- Wärmebehandlung nach dem Auftragen der Beschichtungszusammensetzung,
**dadurch gekennzeichnet, daß** eine Beschichtungszusammensetzung aufgetragen wird, die eine basische kolloidale Lösung wenigstens eines hitzebeständigen Oxids in Wasser, die wenigstens eine Verbindung im wesentlichen vom Typ Borosilikat sowie das wenigstens eine Metallborid umfaßt.

2. Verfahren nach Anspruch 1, wobei eine durch eine basische Verbindung stabilisierte kolloidale Lösung verwendet wird.

3. Verfahren nach einem der Ansprüche 1 und 2, wobei die Beschichtungszusammensetzung umfaßt:
25 % bis 50 % wäßrige kolloidale Lösung eines hitzebeständigen Oxids mit einer Konzentration an hitzebeständigem Oxid zwischen 20 % und 50 %,
5 % bis 20 % Pulver einer glasartigen Zusammensetzung im wesentlichen vom Typ Borosilikat,
30 % bis 60 % Metallborid-Pulver, und
wobei die mögliche Ergänzung Wasser ist.

4. Verfahren nach einem der Ansprüche 1 bis 3, wobei die aufgetragene Menge an Beschichtungszusammensetzung gewählt ist, um eine Beschichtung zu bilden, die nach der Wärmebehandlung eine Dicke im Bereich zwischen 50 µm und 250 µm aufweist.

5. Verfahren nach Anspruch 4, wobei die aufgetragene Menge an Beschichtungszusammensetzung gewählt ist, um eine Beschichtung mit einer Dicke im Bereich zwischen 50 µm und 100 µm zu bilden.

6. Verfahren nach einem der Ansprüche 1 bis 5, wobei eine erste Wärmebehandlung nach dem Imprägnieren mit der imprägnierungszusammensetzung durchgeführt wird und eine zweite Wärmebehandlung nach dem Auftragen der Beschichtungszusammensetzung durchgeführt wird.

7. Verfahren nach Anspruch 6, wobei die zweite Wärmebehandlung unter oxidierender Atmosphäre bei einer Temperatur von etwa 800°C bis 850°C über eine relativ kurze Zeitdauer von einigen Minuten bis zu einigen zehn Minuten durchgeführt wird.

8. Verfahren nach einem der Ansprüche 1 bis 7, wobei die kolloidale Lösung wenigstens ein Oxid, das aus den Silizium-, Titan-, Vanadium-, Zirkonium- und Yttriumoxiden ausgewählt ist, umfaßt.

9. Verfahren nach Anspruch 8, wobei die kolloidale Lösung eine wäßrige Lösung aus kolloidalem Siliziumdioxid ist.

10. Verfahren nach einem der Ansprüche 1 bis 9, wobei das Pulver aus wenigstens einem Metallborid ein Pulver aus wenigstens einem Borid, das aus den Titan-, Vanadium-, Zirkonium- und Hafniumboriden ausgewählt ist, umfaßt.

11. Verfahren nach Anspruch 10, wobei das Pulver aus wenigstens einem Metallborid ein Pulver aus Titandiborid TiB₂ ist.
